# EUROPEAN PATENT APPLICATION

(11) **EP 4 176 724 A1**
(43) Date of publication of application: **10.05.2023**
(21) Application number: 21207193.0
(22) Date of filing: 09.11.2021
(51) Int. Cl.: A21D 13/26, A23D 9/007, A23D 9/04, A23K 20/121, A23K 40/30, A23L 29/262, A23L 35/00

(54) **USE OF AN OLEOGEL AS A LAYER OR COATING**

(71) Applicant: Universität Hohenheim, 70599 Stuttgart (DE)
(72) Inventor: WOERN, Carlos, 70197 Stuttgart (DE); OPPEN, Dominic, 73760 Ostfildern (DE); HEMRICH, Leo, 97237 Altertheim (DE); LÖFFLER, Myriam, 70599 Stuttgart (DE)
(74) Representative: Patentanwälte Ruff, Wilhelm, Beier, Dauster & Partner mbB

(57) **Abstract**

The invention refers to the use of an oleogel comprising the following components:
- a lipid component, such as canola oil and
- a gelling component, such as ethyl cellulose
as a moisture barrier layer, preferably coating, for an object.

Further, the invention relates to an object layered with the oleogel and to a process for layering an object.

## Description

### FIELD OF THE INVENTION

The present invention relates to the use of an oleogel as a layer, in particular coating, for an object, to an object layered by the oleogel and to a process for layering an object.

### BACKGROUND OF THE INVENTION

The formation of barrier layers, in particular barrier coatings, preferably being impermeable to humidity or gases such as water vapor, is important for many technical fields of application such as food sector, pet food sector, package sector, cosmetic sector and dosage form sector.

For example, humidity barrier coatings such as for food, may be accomplished by oil-in-water emulsions as disclosed in EP 0 465 801 A1, EP 0 471 558 A2, WO 2014/001437 A1 and US 5,543,164. Also, water-in-oil emulsions may be applied to realize humidity barriers in food. Respective water-in-oil emulsions are, for example, described in US 4,293,572, US 2008/0113067 A1 and GB 2 363 049 A.

Further, food components having a high proportion of fat may be used as a humidity barrier in more processed foods. A respective food product is for example known from EP 0 064 155 A2.

A multi-component food product having a retarded water transfer among its components is known from US 4,915,971. A multi-layer edible moisture barrier suitable to separate food components having different water activities in a food product is known from US 2004/0197459 A1.

Further, it is known to use bioplastics, mixtures of lipids and biopolymers, multi-layer systems, in particular comprising a layer of biopolymer and a non-biodegradable layer, and combinations of natural and synthetic lipids. Respective approaches are, for example, known from EP 0 542 143 A1, WO 2018/067006 A1, US 5,213,858, DE 41 21 901 A1, EP 2 829 396 A1, EP 0 865 915 A1, EP 3 278 972 A1, WO 96/03886 A1, US 10,081,168 B2, WO 99/44909 A1 and WO 2011/089015 A2.

In order to achieve a humidity barrier in pet food, coatings of animal origin, mixtures of lipids, digestible film forming materials, multi-layer systems and desiccants are used. Respective approaches are known, for example, from EP 1 825 762 A1, US 2003/0129295 A1, WO 2016/012622 A1, US 2003/0215547 A1, US 2009/0092704 A1, US 4,803,085, US 4,104,407, WO 2010/138372 A2 and US 2011/0027343 A1.

As regards dosage forms, a coating aims at protecting a drug and facilitating a targeted drug release. In order to achieve the afore-said goals, polymer coatings, mixtures containing lipids, film forming materials, multi-component systems and soft capsules comprising biopolymers are used. Respective approaches are known, for example, from US 5,681,585, US 2008/0311205 A1, US 6,190,692 B1, US 2014/0271896 A1, EP 2 269 587 A1, US 3,798,338, US 5,084,278, US 2016/0106683 A1, US 2016/0317456 A1, US 4,780,316 and US 2012/0269889 A1.

Despite the number of approaches available for barrier layers, in particular barrier coatings, the single approaches often suffer from the disadvantage of an insufficient barrier function, in particular at higher temperatures such as temperatures equal to or above 100 °C. In that regard, conventional barrier layers or coatings are often not capable of withstanding an increased water vapor partial pressure and therefore cannot avoid penetration of humidity. Apart from that, the conventional barrier layers often lack a sufficient heat resistance and resilience towards mechanical load.

### OBJECT AND SOLUTION

In view of the foregoing, the object underlying the present invention is therefore to make available a composition which properly addresses the disadvantages known from the prior art. In particular, the composition shall prevent or reduce passage of humidity, i.e. water, and/or gases, in particular water vapor, and/or microorganisms. Further, the composition shall exhibit a sufficient heat resistance and in particular be resilient to mechanical load. Furthermore, the composition shall facilitate a controlled or targeted passage of drugs.

This object is accomplished by the use of an oleogel according to independent claim 1, by an object according to claim 14 and by a process according to claim 15. Preferred embodiments of the invention are defined in the dependent claims. Further preferred embodiments of the invention are disclosed in the present description. The subject-matter and wording, respectively, of all claims is hereby incorporated into the description by explicit reference.

According to a first aspect, the present invention refers to the use of an oleogel as a layer, preferably coating, for an object, i.e. for layering, preferably coating, an object. The oleogel comprises the following components:
- a lipid component and
- a gelling component.

Gels are conventionally defined by their rheological properties, in particular their yield stress and the ratio of their elastic modulus to their viscous modulus (G'/G"), in particular as measured at 20 °C, 0.01% strain and 10 rad/s in a conventional rheometer. The storage modulus measured at those conditions of gels of the present invention suitably is in the range form 10³ - 10⁹ Pa, preferably in the range from 10⁵ - 10⁸ Pa, most preferably in the range from 10⁶ - 10⁷ Pa. Gel-like behavior is characterized by G'/G" greater than 1 under these conditions. The ratio of G' to G" is usually expressed as loss angle (tan *δ* = *G"*/*G')*. Gels of the present invention suitably have loss angles from 0.01 to 0.4, for example from 0.1 to 0.2. For applications in which gels have to withstand a certain temperature, the cross-over point is of high interest. It is determined as the temperature at which G' and G" are equal. Further heating leads to flow behavior (G'<G"), and further cooling to gelling (G'>G") of the system. The gels of the present invention suitably may have cross-over points above 90 °C, more suitably higher than 110 °C, under these conditions. Systems of the present application may have loss angles smaller than 0.8 at 80 °C, for example smaller than 0.5 at 80 °C.

The here described material properties of the oleogel are mainly dependent on the mechanical resistance. The texture properties are closer to solid materials than semi-solid material. Characterizing mechanical properties of solid materials is typically carried out with a texture analyzer. In particular, tensile tests, backward- and forward extrusion tests may be conducted. A defined geometry of the sample is therefore mounted into a device with a moving probe head, which can record the acting force over time. Compression tests are performed by compressing a defined sample volume between two plates with a constant and defined speed of the probe head (in the range of 1.5 mm/s). For backward extrusion tests, the sample is penetrated with a certain geometry (flat or spheric) at constant speed for a defined penetration depth. Forward extrusion tests are conducted by pressing the sample through a defined orifice at constant speed. The gels used according to the present invention suitably may have a hardness from 1 to 100 N, for example from 50 to 80 N, as tested with a flat cylinder of 6 mm diameter and a penetration depth of 5 mm.

The term "oleogel" as used according to the present invention refers to a gel having the lipid component, which is preferably an oil component, as a continuous lipid phase, preferably continuous oil phase, and having the gelling component, preferably uniformly, dispersed in the continuous lipid phase, in particular continuous oil phase. The oleogel is preferably clear and translucent or even a transparent material having the physical properties of a true gel as described above. The term "layer" as used according to the present invention may refer to a monolayer, i.e. a single layer, or a multilayer, i.e. a structure comprising or consisting of many or several layers.

As mentioned above, the layer according to the present invention is preferably in the form of a coating, in particular mono-layer coating or multi-layer coating.

The present invention rests in particular on the surprising finding that an oleogel comprising a lipid component and a gelling component may advantageously act as a barrier layer, in particular barrier coating, that is capable of preventing or reducing passage of moisture or humidity, in particular water, and/or gas, in particular water vapor, and/or microorganisms and/or controlling, in particular retarding, passage of drugs through the barrier layer, in particular barrier coating. Thus, the layer, in particular coating, according to the present invention may also be termed as a barrier layer, in particular barrier coating. Advantageously, the use of an oleogel according to the present invention facilitates new fields of applications, in particular in the area of food, feed such as pet food, packaging such as food packaging or feed packaging, cosmetics, drugs and dosage forms.

Principally, the object may only be partly or completely layered, in particular coated, with the oleogel.

Further, the layer according to the present invention may have a constant thickness or a non-constant thickness.

In particular, the layer may have a thickness of 50 µm to 2 mm, in particular 200 µm to 1 mm, preferably 300 µm to 500 µm.

In an embodiment of the invention, the layer is in the form of an intermediate layer or boundary layer or interface layer. In other words, according to an embodiment of the invention, an intermediate or boundary surface or interface of the object is layered by the oleogel.

Alternatively, the layer may be preferably in the form of an exterior, i.e. outer or outmost, layer. For example, the layer may be in the form of an enamel or glaze. In other words, alternatively, an exterior, i.e. outer or outmost, surface of the object may be preferably layered by the oleogel.

In a further embodiment of the invention, the layer separates components, in particular two components, or is arranged between components, in particular two components, of the object. More preferably, the components are adjacent or neighboring components. Further, the components are preferably distinguishable components or components being different from each other. Especially preferably, the components differ in terms of their humidity or moisture, in particular water, level or proportion. Further, the components may be in the form of a layer, domain or zone of the object.

In a further embodiment of the invention, the layer separates an interior of the object, wherein the interior is enclosed by the layer, and an environment surrounding the layer or the object.

In a further embodiment of the invention, the object is in the form of a food, a feed, a packaging, a cosmetic product, a drug, a dosage form or a component thereof.

The term "food" as used according to the present invention refers to a product that is intended for consumption by human beings.

The food may be in the form of meat or meat products, fish such as seafood or products made thereof, convenience food, meat analogue (i.e. meat-like substance made from plants), ice, fruits or fruit products, vegetables or vegetable products, bakery foods such as cake, cookies, bread, pies or pastry, toppings, such as croutons or fried batter pearls, cereals, pasta, dairy products, eggs or egg products, soup or stew, confectionery or dietary supplements. Preferably, the food is in the form of a multi-component food.

The term "multi-component food" as used according to the present invention refers to a food comprising or consisting of multiple, i.e. two or more, components, in particular individual or distinct components. The components may be present in the form of a layer, domain, zone or a combination thereof. Preferably, the components are present in an unmixed condition or form. For example, the multi-component food may comprise a least two sensorial distinct and unmixed components. For example, the multi-component food may be in the form of a meat or meat analogue or bakery food.

The term "feed" as used according to the present invention refers to a product that is intended for consumption by animals (i.e. not by human beings).

The feed may be in the form of pet food such as chewing bones, chewing strips, wet feed, dry feed, dietary supplements, dental care products or snack products. Preferably, the feed is in the form of a multi-component feed.

The term "multi-component feed" as used according to the present invention refers to a feed comprising or consisting of multiple, i.e. two or more, components, in particular individual or distinct components. The components may be present in the form of a layer, domain, zone or a combination thereof. Preferably, the components are present in an unmixed condition or form. For example, the multi-component feed may comprise a least two sensorial distinct and unmixed components. For example, the multi-component feed may be in the form of a meat or meat analogue or bakery feed.

The packaging may be in the form of a food packaging, i.e. a packaging being intended for wrapping or packaging food. Thus, the food may be advantageously protected from an environment surrounding the packaging. Further, an inner and in particular preserving atmosphere of the packaging may be advantageously maintained.

Alternatively, the packaging may be in the form of a feed, in particular pet food, packaging, i.e. a packaging being intended for wrapping or packaging feed, in particular pet food. Thus, the feed may be advantageously protected from an environment surrounding the packaging. Further, an inner and in particular preserving atmosphere of the packaging may be advantageously maintained.

The dosage form may be in particular in the form of a tablet or capsule, in particular soft capsule. Preferably, the oleogel forms a shell of the dosage form.

In a further embodiment of the invention, the object is in the form of a multi-component product.

The term "multi-component product" as used according to the present invention refers to a product comprising or consisting of multiple, i.e. two or more, components, in particular individual or distinct components. The components may be present in the form of a layer, domain, zone or a combination thereof.

In particular, the object may be in the form of a multi-component food or multi-component feed or multi-component packaging.

Especially preferably, the object is in the form of a multi-component food or multi-component feed and the layer separates components, preferably adjacent or neighboring components, in particular two adjacent or neighboring components, of the multi-component food and feed, respectively. Thus, desired sensory characteristics such as taste and/or texture may be maintained over a longer period of time.

Preferably, the oleogel is heat-resistant, in particular without losing mechanical resilience and/or barrier properties. Particularly, the oleogel may be heat-resistant at a temperature from 60 °C to 140 °C, in particular from 80 °C to 140 °C, preferably from 100 °C to 140 °C. Further, the oleogel may comprise, in particular exclusively, biodegradable components. Thus, sustainability of the oleogel may be advantageously improved.

In a further embodiment of the invention, the oleogel comprises, in particular exclusively, edible components. Thus, the oleogel may be advantageously employed in the food and feed sectors.

Principally, the components of the oleogel or a part of the components of the oleogel, in particular the lipid component and/or the gelling component, may be of vegetable origin and/or animal origin.

Further, the oleogel may be preferably free of components of animal origin. Thereby, sustainability of the oleogel may be (additionally) enhanced. In a further embodiment of the invention, the oleogel comprises, in particular exclusively, components of vegetable origin. Thereby, sustainability of the oleogel may be (also) optimized.

Alternatively, the oleogel may be free of components of vegetable origin. In particular, the oleogel may comprise, in particular exclusively, components of animal origin.

The lipid component according to the present invention advantageously contributes to an effective barrier characteristic of the oleogel. In addition, the lipid component contributes to the strength of the oleogel, and thus to the resilience of the oleogel towards mechanical load.

The lipid component is preferably an edible lipid component and/or of vegetable origin, i.e. made or obtained from plants. Alternatively, the lipid component may be of animal origin, i.e. made or obtained from animals, in particular mammals such as cows, calfes, sheeps, goats, pigs, rabbits and the like, or non-mammals such as insects.

Principally, the lipid component may be selected from the group consisting of oil component, fatty acid, wax, sterol, fat-soluble vitamin, monoglyceride, diglyceride, triglyceride, fat such as hydrogenated vegetable fat, phospholipid and mixtures of at least two of the afore-said lipid components.

The fatty acid may be a short-chained fatty acid, i.e. a fatty acid having an aliphatic carbon chain of five carbon atoms or fewer carbon atoms. Alternatively or in combination, the fatty acid may be a medium-chain fatty acid, i.e. a fatty acid having an aliphatic carbon chain of 6 carbon atoms to 12 carbon atoms. Alternatively or in combination, the fatty acid may be a long-chain fatty acid, i.e. a fatty acid having an aliphatic carbon chain of 13 carbon atoms to 21 carbon atoms. Alternatively or in combination, the fatty acid may be a very long chain fatty acid, i.e. a fatty acid having an aliphatic carbon chain of 22 carbon atoms or more carbon atoms.

Further, the fatty acid may be a saturated fatty acid and/or an unsaturated fatty acid.

For example, the fatty acid may be selected from the group consisting of caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid, docosahexaenoic acid and mixtures of at least two of the afore-said fatty acids.

The wax may be a plant wax, in particular carnauba wax and/or candelilla wax, and/or an animal wax, in particular bees wax.

The sterol may be selected from the group consisting of cholesterol (and its derivatives), bile acids (and their conjugates), phytosterols, beta-sitosterol, stigmasterol, brassicasterol and mixtures of at least two of the afore-said sterols.

The term "monoglyceride" as used according to the present invention refers to a glyceride which is composed of a molecule of glycerol linked to one, i.e. only one, fatty acid via an ester bond. The monoglyceride may be selected from the group consisting of caprylic acid monoglyceride, capric acid monoglyceride, lauric acid monoglyceride, myristic acid monoglyceride, palmitic acid monoglyceride, stearic acid monoglyceride, arachidic acid monoglyceride, behenic acid monoglyceride, lignoceric acid monoglyceride, cerotic acid monoglyceride, myristoleic acid monoglyceride, palmitoleic acid monoglyceride, sapienic acid monoglyceride, oleic acid monoglyceride, elaidic acid monoglyceride, vaccenic acid monoglyceride, linoleic acid monoglyceride, linoelaidic acid monoglyceride, α-linolenic acid monoglyceride, arachidonic acid monoglyceride, eicosapentaenoic acid monoglyceride, erucic acid monoglyceride, docosahexaenoic acid monoglyceride and mixtures of at least two of the afore-said fatty acid monoglycerides.

The term "diglyceride" as used according to the present invention refers to a glyceride consisting of two fatty acid chains covalently bonded to a glycerol molecule via ester linkages. The diglyceride may be selected from the group consisting of caprylic acid diglyceride, capric acid diglyceride, lauric acid diglyceride, myristic acid diglyceride, palmitic acid diglyceride, stearic acid diglyceride, arachidic acid diglyceride, behenic acid diglyceride, lignoceric acid diglyceride, cerotic acid diglyceride, myristoleic acid diglyceride, palmitoleic acid diglyceride, sapienic acid diglyceride, oleic acid diglyceride, elaidic acid diglyceride, vaccenic acid diglyceride, linoleic acid diglyceride, linoelaidic acid diglyceride, α-linolenic acid diglyceride, arachidonic acid diglyceride, eicosapentaenoic acid diglyceride, erucic acid diglyceride, docosahexaenoic acid diglyceride and mixtures of at least two of the afore-said fatty acid diglycerides.

The term "triglyceride" as used according to the present invention refers to an ester derived from glycerol and three fatty acids. Ther triglyceride may be selected from the group consisting of caprylic acid triglyceride, capric acid triglyceride, lauric acid triglyceride, myristic acid triglyceride, palmitic acid triglyceride, stearic acid triglyceride, arachidic acid triglyceride, behenic acid triglyceride, lignoceric acid triglyceride, cerotic acid triglyceride, myristoleic acid triglyceride, palmitoleic acid triglyceride, sapienic acid triglyceride, oleic acid triglyceride, elaidic acid triglyceride, vaccenic acid triglyceride, linoleic acid triglyceride, linoelaidic acid triglyceride, α-linolenic acid triglyceride, arachidonic acid triglyceride, eicosapentaenoic acid triglyceride, erucic acid triglyceride, docosahexaenoic acid triglyceride and mixtures of at least two of the afore-said fatty acid triglycerides.

Further, the triglyceride may be a homotriglyceride, i.e. a triglyceride having three identical fatty acid moieties. For example, the homotriglyceride may be selected from the group consisting of stearin, palmitin and mixtures thereof.

Further, the triglyceride may be a heterotriglyceride, i.e. a triglyceride having at least two, in particular having three, different fatty acid moities.

The phospholipid may be for example lecithin, a phosphoglyceride such as phosphatidylcholine, phosphatidic acid, phosphatidylethanolamine, phosphatidylserine, phosphoinositides or a phosphosphingolipid such as ceramide phosphorylcholine, ceramide phosphorylcholine, ceramide phosphoryllipid or mixtures of at least two of the afore-said phospholipids.In a further embodiment of the invention, the lipid component is an oil component, in particular an edible and/or vegetable oil component. In principle, vegetable oils - at least partly - may have the advantage of representing a sustainable resource. Thus, sustainability of the oleogel may be (additionally) optimized. Alternatively, the oil component may be an animal oil component.

Preferably, the oil component is selected from the group consisting of rapeseed oil (colza oil), sunflower oil, olive oil, nut oil, walnut oil, peanut oil, hazelnut oil, pistachio kernel oil, soybean oil, canola oil, corn oil, safflower oil, flaxseed oil, almond oil, fish oil, algal oil, palm oil, palm stearin, palm olein, palm kernel oil, high oleic soybean, sunflower oil, hydrogenated palm kernel oil, hydrogenated palm stearin, fully hydrogenated soybean, cotton seed oil, high stearic sunflower oil, enzymatically and chemically interesterified oils, butter oil, cocoa butter, avocado oil, coconut oil, argan oil, grape seed oil, rice bran oil and mixtures of at least two of the afore-said oils.

Preferably, the oil component is a vegetable oil having a proportion of monounsaturated fatty acid of at least 25% by weight, based on the total weight of the vegetable oil. More preferably, the oil component is rapeseed oil. Most preferably, the rapeseed oil has a proportion of saturated fatty acids of 6 % by weight, a proportion of monounsaturated fatty acids of 63 % by weight and a proportion of polyunsaturated fatty acids of 31 % by weight, based on the total weight of the rapeseed oil. respectively. In a further embodiment of the invention, the lipid component has a proportion of 40 % by weight to 95 % by weight, in particular 55 % by weight to 90 % by weight, preferably 65 % by weight to 80 % by weight, based on the total weight of the oleogel. The proportions of the lipid component as disclosed in this paragraph are especially useful for providing an oleogel being capable of acting as a barrier, in particular in terms of humidity and/or gases and/or microorganisms, and/or acting as a control, in particular in terms of drug release.

The gelling component preferably acts as a structuring component. Further, also the gelling component may advantageously contribute to the strength of the oleogel, and thus to its resilience towards mechanical stress. Furthermore, the heat resistance of the oleogel may be advantageously adjusted via the melting point of the gelling component. Preferably, the gelling component has a melting point of 150 °C to 250 °C, in particular 160 °C to 220 °C, preferably 170 °C to 190 °C. In case that the gelling agent undergoes a glass transition during cooling, the gelling agent may have a glass transition temperature of 100 °C to 200 °C, in particular 110 °C to 160 °C, preferably 120 °C to 140 °C.

In a further embodiment of the invention, the gelling component is selected from the group consisting of cellulose polymers, carbomers, poloxamers, ceramides and mixtures of at least two of the afore-said gelling components.

Preferably, the gelling component is a cellulose polymer, in particular selected from the group consisting of alkyl cellulose, hydroxyalkyl cellulose, carboxyalkyl cellulose and mixtures of at least two of the afore-said cellulose polymers.

The alkyl cellulose may be selected from the group consisting of methyl cellulose, ethyl cellulose, n-propyl cellulose, isopropyl cellulose, butyl cellulose and mixtures of at least two of the afore-said alkyl celluloses.

The hydroxyalkyl cellulose may be in particular selected from the group consisting of hydroxymethyl cellulose, hydroxyethyl cellulose, hydroxypropyl cellulose, hydroxypropylmethyl cellulose and mixtures of at least two of the afore-said hydroxyalkyl celluloses.

The carboxyalkyl cellulose may be in particular carboxymethyl cellulose.

Especially preferably, the gelling component is ethyl cellulose (EC). Ethyl cellulose is a nutritionally beneficial fiber. In addition, ethyl cellulose is a GRAS material (Generally Regarded As Safe material) for use in food products making EC. EC may have intermediate viscosities of 2 cp to 200 cp, in particular 10 cp to 100 cp, preferably 15 cp to 45 cp, especially suitable for the present invention. The cp values refer to viscosity in centipoise of a 5 % solution of the EC in 80 % toluene / 20 % ethanol at 25 °C, and therefore correlate to the molecular weight of the EC. For example, the EC may have a molecular weight of 5 kDa to 200 kDa, in particular 20 kDa to 140 kDa, preferably 45 kDa to 80 kDa.

Further, the ethyl cellulose may have a proportion of ethoxyl groups from 25% by weight to 75% by weight, in particular 40% by weight to 60% by weight.

Further, the ethyl cellulose may have a degree of substitution of 0.8 to 3, in particular 1 to 3, preferably 1.5 to 3, more preferably 2 to 2.8, especially preferably 2.2 to 2.6. The term "degree of substitution" used in this context refers to the number of hydroxyl groups on the repeating glucose units that have been converted into ethyl ether groups.

For example, ethyl celluloses being suitable within the scope of the present invention are available from DUPONT under the registered trademark ETHOCEL.

In a further embodiment of the invention, the gelling component has a proportion of 1 % by weight to 50 % by weight, in particular 5% by weight to 40% by weight, preferably 12 % by weight to 25 % by weight, based on the total weight of the oleogel.

In a further embodiment of the invention, the oleogel further comprises a surfactant. Thus, the strength and/or plasticity, in particular elasticity, of the oleogel may be advantageously adjusted. Preferably, the surfactant plasticizes the gelling component, slows down the gelation process (increase the gelation time) and induces or favors the formation of stable, translucent, elastic, non-brittle gels.

The surfactant may be in particular selected from the group consisting of fatty acid, fatty alcohol, phospholipid, polyoxyethylene sorbitan monooleate (Tween 80), polyoxyethylene sorbitan tristearate (Tween 65), polyoxyethylene sorbitan monostearate (Tween 60), sorbitan monooleate (SMO or Span 80), sorbitan monostearate (SMS or Span 60), glyceryl monooleate (GMO), glyceryl monostearate (GMS), glyceryl monopalmitate (GMP), polyglyceryl ester of lauric acid - polyglyceryl polylaurate (PGPL), polyglyceryl ester of stearic acid - polyglyceryl polystearate (PGPS), polyglyceryl ester of oleic acid (PGPO), polyglyceryl polyoleate (PGPO), polyglyceryl ester of ricin oleic acid (PGPR), diglycerides, monoglycerides (such as succinylated monoglyceride, lactylated monoglyceride, acetylated monoglyceride, monoglyceride citrate, monoglyceride phosphate, stearyl monoglyceride citrate, and diacetyl-tartrate ester of monoglyceride), calcium stearoyl lactylate, sodium stearoyl lactylate, sucrose esters, triethyl citrate and mixtures of at least two of the afore-said surfactants.

As regards useful fatty acids, reference is made in its entirety to the previous description.

The fatty alcohol may be selected from the group consisting of tert-butyl alcohol, tert-amyl alcohol, 3-methyl-3-pentanol, 1-heptanol, 1-octanol, pelargonic alcohol, 1-decanol, undecyl alcohol, lauryl alcohol, tridecyl alcohol, myristyl alcohol, pentadecyl alcohol, cetyl alcohol, palmitoleyl alcohol, heptadecyl alcohol, stearyl alcohol, oleyl alcohol, nonadecyl alcohol, arachidyl alcohol, henecosyl alcohol, behenyl alcohol, eurocyl alcohol, lignoceryl alcohol, ceryl alcohol, 1-heptacosanol, montanyl alcohol, 1-nonacosanol, myricyl alcohol, 1-dotriacontanol, geddyl alcohol and mixtures of at least two of the afore-said fatty alcohols.

In a further embodiment of the invention, the surfactant has a proportion of 0.1% by weight to 30 % by weight, in particular 1 % by weight to 20 % by weight, preferably 5 % by weight to 15 % by weight, based on the total weight of the oleogel.

Further, the surfactant may be a mixture of at least two different surfactants. Preferably, the surfactant may be a mixture of a fatty acid and a fatty alcohol, in particular a mixture of stearic acid and stearyl alcohol. Furthermore, the mixture may have a ratio of the fatty acid, in particular stearic acid, and the fatty alcohol, in particular stearyl alcohol, of 1 : 16 to 4:1, in particular 1:8 to 1:1, preferably 1 : 4.

In a further embodiment of the invention, the oleogel further comprises an antioxidant. Thus, the risk of rancidity and/or off-flavor associated with oxidation processes may be advantageously eliminated or at least considerably reduced. The antioxidant may be in particular selected from the group consisting of butylated hydroxyanisole (BHA), butylated hydroxytoluene (BHT), gallates (such as propyle gallate), tertiary butylhydroquinone (TBHQ), tocopherols (such as α-tocopherol), caffeic acid, ferulic acid, gallic acid, hydroxytyrosol, tyrosol, carnosic acid, catechin, quercetin, sesamol, myricetin, genistein, oryzanol, phytosterols, sesamolin, squalene and mixtures of at least two of the afore-said antioxidants.

Further, the antioxidant may have a proportion of 10 ppm by weight to 1000 ppm by weight, in particular 50 ppm by weight to 500 ppm by weight, preferably 80 ppm by weight to 150 ppm by weight, based on the total weight of the oleogel. Further, the oleogel may further comprise a taste-active component. The tase-active component may be in particular a conventional taste-active component such as natural and artificial flavors. These may be in particular selected from the group consisting of synthetic flavor oils and flavoring aromatics, and/or oils, oleo resins and extracts derived from plants, leaves, flowers, fruits and so forth, and combinations thereof. Representative flavor oils include: spearmint oil, cinnamon oil, peppermint oil, clove oil, bay oil, thyme oil, cedar leaf oil, oil of nutmeg, oil of sage, and oil of bitter almonds. Also useful are artificial, natural or synthetic fruit flavors such as vanilla, chocolate, coffee, cocoa and citrus oil, including lemon, orange, grape, lime and grapefruit and fruit essences including apple, pear, peach, strawberry, raspberry, cherry, plum, pineapple, apricot and so forth. These flavorings can be used individually or in admixture. Commonly used flavors include mints such as peppermint, artificial vanilla, cinnamon derivatives, and various fruit flavors, whether employed individually or in admixture. Flavorings such as aldehydes and esters including cinnamyl acetate, cinnamaldehyde, citral, diethylacetal, dihydrocarvyl acetate, eugenyl formate, p-methylanisole or mixtures of at least two of the afore-said taste-active components may also be used. Generally, any flavoring or food additive, such as those described in Chemicals Used in Food Processing, publication 1274 by the National Academy of Sciences, pages 63-258, may be used. Further examples of aldehyde flavorings include, but are not limited to acetaldehyde (apple), benzaldehyde (cherry, almond), cinnamic aldehyde (cinnamon), citral, i.e., alpha citral (lemon, lime), neral, i.e. beta citral (lemon, lime), decanal (orange, lemon), ethyl vanillin (vanilla, cream), heliotropine, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e. trans-2 (berry fruits), tolyl aldehyde (cherry, almond), veratraldehyde (vanilla), 2,6-dimethyl-5-heptenal, i.e. melonal (melon), 2-6-dimethyloctanal (green fruit), and 2-dodecenal (citrus, mandarin), cherry, grape, mixtures thereof; and the like.

The amount of taste-active component employed is normally a matter of preference subject to such factors as flavor type, individual flavor, and strength desired. Thus, the amount may be varied in order to obtain the result desired in the final product. For example, the taste-active component may have a proportion of 0.01 % by weight to 20 % by weight, in particular 0.1 % by weight to 10 % by weight, preferably 1 % by weight to 5 % by weight, based on the total weight of the oleogel.

According to a second aspect, the present invention refers to an object layered, in particular coated, with an oleogel according to the first aspect of the present invention.

The object may be preferably in the form of a food, a feed, a packaging, a cosmetic product, a drug, a dosage form or a component thereof.

The food may be in the form of meat or meat products, fish such as seafood or products made thereof, convenience food, meat analogue (i.e. meat-like substance made from plants), ice, fruits or fruit products, vegetables or vegetable products, bakery foods such as cake, cookies, bread, pies or pastry, toppings, such as croutons or fried batter pearls, cereals, pasta, dairy products, eggs or egg products, soup or stew confectionery or dietary supplements. Preferably, the food is in the form of a multi-component food.

The feed may be in the form of pet food such as chewing bones, chewing strips, wet feed, dry feed, dietary supplements, dental care products or snack products. Preferably, the feed is in the form of a multi-component feed.

The packaging may be in the form of a food packaging or feed, in particular pet food, packaging.

The dosage form may be in particular in the form of a tablet or capsule, in particular soft capsule. Preferably, the oleogel forms a shell of the dosage form.

Especially preferably, the object is in the form of a multi-component food or multi-component feed and the layer separates components, in particular adjacent or neighboring components, of the multi-component food and feed, respectively.

With respect to further features and advantages of the object, in particular with respect to the oleogel, reference is made in its entirety to the previous description. The features and advantages described in the previous invention do also apply, mutatis mutandis, with respect to the object according to the second aspect of the present invention.

According to a third aspect, the present invention refers to a process for layering, in particular coating, an object comprising the step of
- applying an oleogel according to the first aspect of the present invention on a surface of the object.

The oleogel may be applied on the surface of the object by means of spraying, immersing, brushing, extruding, laminating, slot die coating, spin coating, printing, 3D printing, or a combination of at least two of the afore-said application techniques. With respect to further features and advantages of the process, in particular with respect to the oleogel and the object, reference is made in its entirety to the previous description. The features and advantages described in the previous description do also apply, mutatis mutandis, with respect to the process according to the third aspect of the present invention.

Further features and advantages of the invention will become clear from the following description of preferred embodiments in form of examples and figures in conjunction with the subject-matter of the dependent claims. The individual features can be realized either singularly or severally in combination in one embodiment of the invention. The preferred embodiments merely serve for further illustration and better understanding of the invention and are not to be understood as in any way limiting the invention.

### FIGURE DESCRIPTION

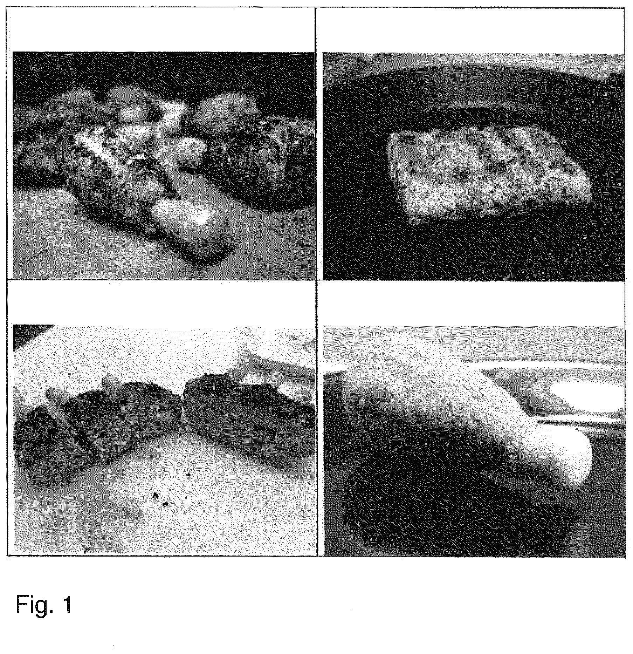

Figure 1 photographically displays artificial chicken drumstick, pork ribs and vegan drumstick (meat analogue).

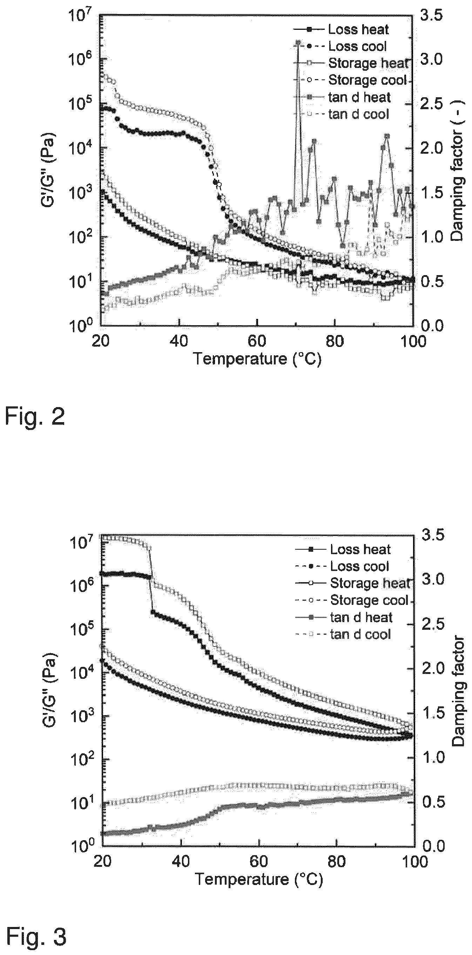

Figure 2 graphically displays the temperature sweep of gel 4 ( Table 1) from 20 °C - 100 °C with a ramp of 0.2 °C/s performed at a strain of 0.01 % and a frequency of 10 rad/s. Data of storage and loss modulus as well as tan(δ) are shown for the heating process and cooling process over the temperature.
Figure 3 graphically displays the temperature sweep of gel 9 ( Table 1) from 20 °C - 100 °C with a ramp of 0.2 °C/s performed at a strain of 0.01 % and a frequency of 10 rad/s. Data of storage and loss modulus as well as tan(δ) are shown for the heating process and cooling process over the temperature.

### EXAMPLES

### Example 1 Preparation and Application of Oleogels

### Example 1.1 - General Preparation Method

The gelling agent, surfactant and antioxidant were placed in a heat stable glass beaker (Pyrex), with a total capacity at least twice as large as the actual filling volume, together with the lipid component - oil, fat and/or wax. The mixture was then subjected to heat using a bench-top convection oven to reach the glass transition temperature of the gelling agent which could vary depending on the type of gelling network (crystalline material, particle filler, fibrous network, etc.) and the nature of the gelling agent (polysaccharide, protein, wax, etc.). For stirring, an overhead mixer equipped with a 3-bladed propeller stirrer, which was fed through a hole in the roof of the oven, was employed. During heating, the stirring rate was gradually increased: the first 3-5 min at 125 rpm, i.e., to deal with the sediment formed by the gelling agent in the lipid at room temperature. Later the rate was raised to 150 rpm until the gel reached the target temperature. The final stage was the holding time (-10 min) at a high speed of 175 rpm; i.e., to ensure complete homogeneity.

### Example 1.2 - Preparation Method for a Ethylcellulose-based Oleogel (including a mixture of Stearyl Alcohol and Stearic Acid)

The gel was prepared in 200 g batches containing 20% (wt/wt) of ethylcellulose 20 cP (EthocelTM Standard 20 Premium, Dow Chemical Company, Midland, MI, USA) mixed with 12% (wt/wt) of a 80%:20% (wt/wt) mixture of stearyl alcohol (1-octadecanol, ≥ 95% purity; Carl Roth GmbH & Co. KG, Karlsruhe, Germany) and stearic acid (1-octadecanoic acid ≥ 98% purity; Carl Roth GmbH & Co. KG, Karlsruhe, Germany) plus 100 ppm butylated hydroxytoluene (Sigma-Aldrich, Darmstadt, Germany), and 68% canola oil purchased from a local wholesaler (MEGA, Stuttgart, Germany) in a 400 mL Pyrex beaker. With a set point of 180 °C, the mixture was placed in a convection oven ("Grillbackofen" KB 27 U.2; Steba Elektrogerate GmbH & Co. KG, Strullendorf, Germany) and reached the target temperature of 145-150 °C in approx. 55 to 60 min. The stirring during heating took place using an overhead mixer (EUROSTAR 20 digital, IKA -Werke GmbH & Co. KG, Staufen, Germany and followed the description from the previous paragraph.

### Example 1.3 - General Application Technology

As cooling down results in an enormous increase in viscosity, the gel was applied in a hot state to obtain a continuous layer on either the interface between two differing phases or the outer surface of a given product. Based on the product's nature and the required thickness of the layer, multiple technologies to apply the gel could be employed including immersing (+hot air to adjust layer thickness), spraying with a steam heated nozzle, and co-extrusion.

### Example 1.4 - Application Methods for Ethylcellulose-based Gel

### A. Immersion plus Hot Air Treatment

The product was dipped in the hot gel and the excess was drained off. The coated product was then exposed to a hot air stream generated by an electric heat blower to blow off gel. The resulting layer thickness of the barrier was determined by the temperature set point and velocity of the blower as well as the duration of blowing. Medium to high layer thickness of the barrier coating could be achieved through this technique.

### B. Spraying with Steam Heated Nozzle

The hot gel was taken out of the oven and a thermostable hose equipped with an electric heating jacket (set to 150 °C) was placed in the beaker. The hose connected to a dual-jacketed nozzle lance that was heated up to 160 °C using super-heated steam. The atomization of the gel was achieved by a two fluid pressure-nozzle with an orifice of 2 mm and operated with pressurized air (6 bar) directed over a heating coil to reach a temperature of about 180 °C. The product was then subjected to the spray and by modifying the duration of spraying the amount of gel on the product could be adjusted and consequently the layer thickness. An additional processing step was needed to allow for a continuous barrier layer with a constant thickness by running a hot air stream (electric heat blower) over the product to evenly spread the gel. Very low to medium layer thickness could be achieved using spraying.

### Example 1.5 - Experiments

A complete overview of all conducted experiments and the formulation of each produced gel is given in

Table 1. The preparation method is already described in **Example 1.1** and **Example 1.2.** The gels were further subjectively evaluated based on their mechanical and haptic properties. The mechanical load resistance and sensory impression was rated on a scale from 1 to 5. For the mechanical load resistance, the scale was defined from **1:** sticks to applied surface; does not break on contact with sharp items; to **5:** very soft gel; penetrateable with round, smooth items; does not stick to the applied surface. Sensory features were rated according to following attributes: **1:** no undesired sensory property detectable; **5:** any of the following or combinations of brittle, sticky, off-taste, malleable. Specific application technologies (packaging and food models) and measurements, different to the here listed methods are described in a later chapter.

**Table 1: Overview of all carried out experiments and subjective evaluation of the produced gel in terms of mechanic and haptic properties on a scale from 1 to 5, where 1 represents the most desired impression**

| Gel number | 1 | 2 | 3 | 4 | 5 | 6 | 7 | 8 | 9 | 10 | 11 | 12 | 13 |
|---|---|---|---|---|---|---|---|---|---|---|---|---|---|
| Dynamic viscosity (cp) | 20 | 20 | 20 | 20 | 20 | 20 | 20 | 20 | 20 | 45 | 20 | 20 | 20 |
| Ethylcellulose (%) | 10 | 6 | 6 | 8 | 8 | 10 | 10 | 14 | 20 | 25 | 20 | 20 | 20 |
| SOSA (%) | 0 | 6 | 10 | 12 | 12 | 14 | 14 | 12 | 12 | 12 | 12 | 12 | 12 |
| Lecithin (%) | 0 | 0 | 0 | 0 | 0 | 0 | 0 | 0 | 0 | 0 | 1 | 2 | 0 |
| Canola Oil (%) | 90 | 88 | 84 | 80 | 48 | 76 | 76 | 74 | 68 | 63 | 67 | 66 | 63 |
| Shortening; Palm (%) | 0 | 0 | 0 | 0 | 32 | 0 | 0 | 0 | 0 | 0 | 0 | 0 | 0 |
| Carnauba Wax (%) | 0 | 0 | 0 | 0 | 0 | 0 | 0 | 0 | 0 | 0 | 0 | 0 | 5 |
| BHT (ppm) | 0 | 0 | 0 | 0 | 0 | 0 | 1 | 50 | 100 | 100 | 100 | 100 | 100 |
| Subjective evaluation | | | | | | | | | | | | | |
| mechanical load resistance | 5 | 5 | 4.5 | 4 | 3.5 | 3 | 3 | 2.5 | 2 | 1 | 2.5 | 2.5 | 1 |
| Sensory impression | 3.5 | 3.5 | 3.5 | 3 | 2.5 | 2 | 1 | 1 | 5 | 3 | 3 | 2 | 3.5 |

### Example 2 - Model Systems/ Prototypes

### Example 2.1 - Artificial Chicken Drumstick/ Pork Ribs and Vegan Drumstick (meat analogue)

### A. Description

The system described in this invention combines the properties to be an edible, water resistant coating, even at high temperatures. This enables innovations in the food area. As model product samples, artificial chicken drumsticks and pork ribs were produced by mimicking the animal meat piece, while replacing the bones with edible bone imitates. Breadsticks in the shape of the chicken and pork bones were merged with either chicken meat, pork meat or a vegan meat analogue. This created a new eating experience by visually recreating the animal meat piece, while adding new texture components with the crunchy edible breadstick instead of the inedible bones.

As breadsticks have a porous structure and are susceptible for water absorption, a barrier layer between the dry breadstick and the moist meat was necessary. Furthermore, this barrier layer had to be heat resistant to process the food product and safe for human consumption. The system described in this invention meets all these requirements and can thus be used as a barrier layer in the described products.

### B. Preparation Method

A bone-like shaped biscuit (*a*_{w} < 0.4) was coated with an ethylcellulose based oleogel (composition according to Example 1.2) by holding the biscuit at one end and dipping most of the surface in the hot gel. Subsequently, the layer thickness of the applied coating was adjusted by blowing off the excess gel from the biscuit using an electric heat blower. The coating was allowed to cool down at room temperature and the remaining, uncoated part of the biscuit was then dipped in the gel and treated with the hot air stream. The fully coated biscuit was then cooled down at room temperature and refrigerated and stored at 4 °C overnight. The next step was represented by formulating the protein matrix surrounding the biscuit to resemble a particular product with a real bone. Therefore, the protein source - chicken meat, pork meat or a plant protein based (soy, pea, etc.) extrudate - was coarsely chopped, treated with a binder (transglutaminase, gluten, etc.) and shaped around the coated biscuit to mimic the natural standard. As fresh meat exposes a very high water activity (*a*w > 0.99), a remarkable concentration gradient of free water molecules with a high potential of migration is present.

### C. Thermal Processing

The coated biscuit covered with the protein matrix needs further processing to treat the raw protein matrix with heat to alter the consistency, taste, digestibility, and shelf life of the product. Two different processes can be applied: 1) Cooking the product in a pot filled with pure water at a temperature of 90 °C to an internal core temperature of 75 °C for about 20 min. 2) Cooking the product in an oven with a steam atmosphere at 90 °C to an internal temperature of 75 °C for about 30 min. The coating still remains resistant to mechanical load and to the increasing potential of water migration at these elevated temperatures.

### D. Storage

The eventual product consisting of the biscuit, coating and protein matrix was best stored in modified atmosphere (nitrogen) packaging (MAP) with a partial vacuum (around 500 mbar) and refrigerated at 4 °C. By meeting these standards, the product had a shelf life of at least 2 weeks.

### E. Experiments

Gels from Experiment 7, 9 and 13 ( Table **1**) were applied to products produced as described under **Experiment 2.1 A.** The products were subjected to experiments, testing their heat resistance and storage stability. Heat resistance was rated based on the mechanical load, which a coated biscuit could withstand after undergoing the in **Experiment 2.1 B** described cooking conditions. The scale for the mechanical load resistance was chosen as already described in **Experiment 1.5.** To evaluate the storage stability of the products, they were stored at 4 °C, either without packaging, or as described in **Experiment 2.1 C** and the texture properties of the low moisture compartment was evaluated after 2 days and 14 days.

**Table 2: Experiments performed on the application examples for food X = no significant changes in texture found; n.d. = not determined**

| | Gel 7 | Gel 9 | Gel 13 |
|---|---|---|---|
| Cooking | | | |
| Steam | n.d. | X | X |
| Water | X | X | X |
| Storage 2 days | | | |
| No packaging | X | X | X |
| with packaging | X | X | X |
| Storage 14 days | | | |
| No packaging | n.d. | X | n.d. |
| with packaging | X | X | X |
| Comment | | combines good | |
| | Upper limit of | mechanical load | |
| | acceptable layer | resistance with very brittle | |
| | thickness | decent sensory and | |
| | | long storage stability | |

### Example 2.2 - Packaging Solution with Bagasse as Carrier Material

### A. Preparation Method

The inside of a cellulose-based packaging tray made from bagasse (dry fibrous material from sugarcane) was coated with the hot gel. To apply it on the surface of the tray, the gel was poured into the tray and slowly rotated assisted by a hot air stream (electric heat blower) to achieve an equal distribution. Another way was represented by spraying the gel on the tray following the super-heated steam method described in Example 1.4 B. Also, the electric heat blower was used additionally with this technique to ensure an even coating of the carrier material. In general, the pouring of the gel yielded a layer thickness of medium to high, whereas the spraying resulted in low to medium layer thickness of the barrier coating.

### B. Assessment of the barrier function against oxygen transmission

To assess the barrier function of the coating on the bagasse carrier material, a simple gas concentration test was employed. A piece of coated bagasse carrier material (approx. 28 cm²) was incorporated onto a cutout (approx. 20 cm²) in a gas-impermeable, plastic vacuum tray using a gas-impermeable adhesive. The tray was then gassed with nitrogen and sealed with an oxygen-impermeable foil. The oxygen concentration over time was monitored by drawing gas samples through a septum using an airtight syringe and injecting the samples into a gas analyzer.

### C. Experiments

Gels from Experiment 9, 11 and 12 ( Table 1) were applied to products produced as described under Experiment 2.2 A. The mechanical load resistance was evaluated subjectively, and the scale was the same as described in **Example 1.5.** The functionality of the oxygen barrier was examined as described in **Example 2.2 B.** The barrier was rated as functionable if oxygen concentration did not exceed 10% after 8 days. The applicability was rated based on how easy the gel could be spread across the bagasse tray, where 1 corresponded to a low viscosity and thereby good applicability and 5 corresponded to a very high viscosity and bad applicability. The layer thickness was evaluated for two application techniques (pouring and spraying). High controllability of the layer thickness, independent of the gel viscosity, was rated as 1, while low controllability was rated as 5.

**Table 3: Results from experiments carried out on bagasse trays with gels 9, 11 and 12 X = test passed**

| | Gel 9 | Gel 11 | Gel 12 |
|---|---|---|---|
| Mechanical load resistance | 2 | 2.5 | 2.5 |
| Applicability | 2 | 1.5 | 1 |
| Oxygen barrier | X | X | X |
| Controllability of layer thickness | | | |
| Pouring | 2 | 1.5 | 1 |
| Spraying | 1 | 1 | 1 |

### Example 3 - Characterization of material properties

For further material scientific characterization of the model gels of the present invention, a soft gel (Gel 4 from Table 1) and the most firm gel (Gel 9 from Table 1) were subjected to rheological and texture analysis.

### Example 3.1 - Rheological characterization

Tests were performed using a MCR502 (Anton Paar GmbH, Ostfildern, Germany). As Testing geometry, a sandblasted plate-plate geometry with 25 mm diameter was chosen. For the rheological characterization, the gels were prepared as described in Example 1 Preparation and Application of Oleogels, and the hot gel was directly applied on the pre-heated surface (80 °C) of the rheometer. Temperature was then adjusted to 20 °C and tests were started as soon as the gel had solidified. To find the right testing parameters, an amplitude sweep and frequency sweep were performed at 20 °C. The gels showed constant behavior at a frequency of 10 rad/s and a strain of 0.01 %. Further, a time sweep was conducted, to determine how long it takes for the gel after solidification to reach constant values of G' and G". After 15 min, both gels showed no significant change in properties, and the temperature sweep was initiated. The temperature sweep was performed in a range from 0 - 100 °C with a constant temperature increase of 0.2 C/s.

### Example 3.2 - Texture analysis

To evaluate the meachnical load resistance, the gels were subjected to a simple puncture test. The gel was therefore poured in a square mould to a layer height of 1 cm. Testing was carried out using an Instron Model 3365 Tensile Tester (Instron GmbH, Darmstadt, Germany) equipped with a flat plate on the bottom and a flat 6 mm steel cylinder attached to the probe head. The gels were punctured 10 times with a traversal speed of 1.5 mm/s to a penetration depth of 5 mm. Gel 4 showed a hardness of 8.5±1.0 N. Gel 9 was significantly harder, with hardness values of 75±5 N.

### Example 4 - Potential fields of application

In addition to the conducted examples described above, the invention can be used in a wide range of other applications. In the following, some illustrative but not limiting examples of application are listed to further illustrate the range of use of the invention.

### Example 4.1 - Use as a coating for toppings, such as fried batter pearls or croutons

Toppings are typically intended to be added to food, including food with a high moisture content such as milk, yoghurt, soups, salads with dressing. Often one of their desirable attributes are their crunchiness, which adds an additional texture attribute to a meal and thus improves the eating experience. Therefore, it is essential for the topping to maintain the crunchiness until consumption. Because of this, the topping is typically added just before consumption and convenience meals such as canned food, soups or dry food to be prepared with hot water do not contain toppings, as they would not maintain their crunchiness over storage or after an additional heating step. Coating toppings with the oleogel described in the current invention overcomes these limitations. The coating provides water resistance and thus ensures the maintenance of crunchiness even over long time storage, while being consumable. Additionally, this water resistance is maintained at high temperatures, which allows the use of toppings in new product innovations and applications. Examples are convenience food with crunchy components that can be stored over a long time period (even with the toppings being surrounded by a wet phase) or the addition to other food with a high moisture content in the area of foodservice, where sometimes longer waiting or delivery times occur.

### Example 4.2 - Use as a coating in the area of baked goods

In the area of baked goods, products often exist in the form of multicomponent food. Typically, layers of dough are combined with other components such as creams, sauces, ice, fillings, fruits, vegetables, or syrup. It is often desired to prevent mass transfer (typically of water) between the single components. This can be achieved by adding separation layers of chocolate or other fat containing layers. The disadvantage is the heat stability of these products, which is not given above the melting point of the fat. Using the oleogel described in this invention as a barrier layer, the barrier function especially against water is maintained at higher temperatures. This allows a baking step of the multicomponent food after the barrier layer has been applied without a loss of the barrier function and thus allows product innovations.

### Example 4.3 - Use as a coating for sticks in food applications

There is a broad range of food products with the characteristic of having a stick attached for consumption. Examples are ice cream, lollipops, or stirrers for drinks (they often consist of a stick with attached chocolate to be dissolved in warm (plant-based) milk). Besides plastics, the sticks can be made from natural resources, such as wood, natural fibers (e.g. paper) or edible resources, often in the form of a bakery product (e.g. made from cookie or waffle dough). Coating edible sticks with the oleogel described in the current invention creates a water barrier which ensures the maintenance of the crunchiness of the stick. Furthermore, the crunchiness of the sticks is also maintained at high temperatures, for example when dipping them in a hot food or drink. This is beneficial compared to existing alternative solutions and can increase the popularity especially for edible sticks.

### Example 4.4 - Use as a coating for dry pet food

Dry products have a significant share in the pet food area. Coatings can be used to improve storage stability of these products. Additionally, coatings with pleasant taste active components can improve the acceptance of a product by the animal. Pet food coated with the oleogel described in this invention meets these requirements and adds the advantage of being heat resistant. This allows the development of new, innovative pet food products. Dry pet food, for example in the form of balls, cubes or in other shapes can be coated with the described oleogel and afterwards incorporated in other pet food, such as wet food. This allows the creation of new multicomponent pet food products, for example canned pet food products with crunchy or chewy components. This is of special interest in high class pet food products and offers added value in terms of the eating experience for the animal or the addition of health benefits, for example by being able to add dental care products in wet pet food.

### Example 4.5 - Use as a coating for straws

As a substitute for plastic straws, there are now alternatives made of (edible) natural resources. With prolonged use and in particular the use for hot beverages, these alternatives have the disadvantage of being susceptible for swelling processes of the ingredients, partly associated with the dissolution of the straws. A coating with the oleogel described in the present invention overcomes these problems and combines various advantages. Due to the variety of methods by which the coating can be applied, it can be used for straws made of different materials, increasing the duration of use due to the water impermeability of the applied coating. At the same time, the coating extends the range of use of the straws, as the heat resistance allows them to be used in hot drinks such as, but not limited to coffee variations, tea, or drinks containing cocoa. Furthermore, the coating does not change the properties of a straw made from (edible) natural resources in terms of sustainability, biodegradability and optional the suitability for consumption, as these properties are also given by the coating.

### Example 4.6 - Use as a coating for disposable dishes (e.g. cups, plates, bowls)

Similar to straws, exposable dishes (e.g. cups, plates, bowls) are increasingly made of (edible) natural resources instead of plastics. Examples are exposable dishes made from wood, other natural fibers (e.g. bagasse or paper), edible raw materials (often in the form of dried doughs such as waffles). This goes along with similar challenges as described for straws. These can be overcome by coating the dishes with the oleogel described in this invention. This enables and improves the use of biodegradable or edible dishes for the whole range of food and beverages, including hot drinks or meals. Again, the oleogel described in this invention combines the advantages of being water resistant, heat stable and biodegradable/ edible. Therefore, the coated dishes allow a prolonged use and the possibilities of use are expanded for a broader variety of food, while the positive properties of the alternatives to plastic in terms of sustainability (biodegradability and/or the suitability for consumption) are maintained.

### Example 4.7 - Use as a coating for pharmaceuticals (focus on soft capsules)

In the pharmacy sector, the physical, chemical, microbiological, therapeutic, pharmaceutical and toxicological stability of drugs has to be guaranteed. Furthermore, other aspects such as surface properties for swallowing and the targeted and regulated release of bioactive substances in the body are of interest. Typical coatings in the pharmacy sector either provide good barrier functions, effective drug release regulation, or act as a swallowing aid. Because of this, multi-layer systems are commonly used to meet all requirements. Coating different pharmaceuticals such as tablets with the oleogel described in this invention combines different benefits. The coating does act as a barrier layer against moisture, gas, microorganisms and does maintain these properties at elevated temperatures. This widens the range of possible storage conditions of the pharmaceuticals. Furthermore, because of the hydrophobic properties of the oleogel, it does provide gastrointestinal resistance and can further be used as a selective diffusion barrier that allows regulated release of hydrophobic bioactive substances. Another advantage are the rheological properties of the oleogel described in this invention. The supple, but mechanically resilient oleogel provides excellent properties as a swallowing aid. This enables the use as soft capsules. While by now in soft capsules gelatin is predominantly used, the oleogel described in this invention can be produced as a plant-based version without the allergy risk of gelatin.

## Claims

1. Use of an oleogel as a layer, preferably coating, for an object, wherein the oleogel comprises the following components:
- a lipid component and
- a gelling component.

2. The use of an oleogel according to claim 1, **characterized in that** the layer is in the form of an intermediate layer or boundary layer.

3. The use according to claim 1 or 2, **characterized in that** the layer separates components, in particular adjacent components, of the object, wherein the components preferably differ in terms of their humidity level.

4. The use of an oleogel according to any of the preceding claims, **characterized in that** the object is a food, feed, packaging, cosmetic product, drug, dosage form or a component thereof.

5. The use according to any of the preceding claims, **characterized in that** the object is a multi-component product, in particular multi-component food or multi-component feed.

6. The use of an oleogel according to any of the preceding claims, **characterized in that** the oleogel comprises, in particular exclusively, edible components and/or components of vegetable origin.

7. The use of an oleogel according to any of the preceding claims, **characterized in that** the lipid component is an oil component, preferably selected from the group consisting of rapeseed oil, sunflower oil, olive oil, nut oil, walnut oil, peanut oil, hazelnut oil, pistachio kernel oil, soybean oil, canola oil, corn oil, safflower oil, flaxseed oil, almond oil, fish oil, algal oil, palm oil, palm stearin, palm olein, palm kernel oil, high oleic soybean, sunflower oil, hydrogenated palm kernel oil, hydrogenated palm stearin, fully hydrogenated soybean, cotton seed oil, high stearic sunflower oil, enzymatically and chemically interesterified oils, butter oil, cocoa butter, avocado oil, coconut oil, argan oil, grape seed oil, rice bran oil and mixtures of at least two of the afore-said oils.

8. The use of an oleogel according to any of the preceding claims, **characterized in that** the lipid component has a proportion of 40 % by weight to 95% by weight, in particular 55 % by weight to 90 % by weight, preferably 65 % by weight to 80 % by weight, based on the total weight of the oleogel.

9. The use of an oleogel according to any of the preceding claims, **characterized in that** the gelling component is a cellulose polymer, in particular ethyl cellulose.

10. The use of an oleogel according to any of the preceding claims, **characterized in that** the gelling component has a proportion of 1 % by weight to 50% by weight, in particular 5% by weight to 40% by weight, preferably 12% by weight to 25% by weight, based on the total weight of the oleogel.

11. The use of an oleogel according to any of the preceding claims, **characterized in that** the oleogel further comprises a surfactant, in particular selected from the group consisting of fatty acid, fatty alcohol, phospholipid, polyoxyethylene sorbitan monooleate (Tween 80), polyoxyethylene sorbitan tristearate (Tween 65), polyoxyethylene sorbitan monostearate (Tween 60), sorbitan monooleate (SMO or Span 80), sorbitan monostearate (SMS or Span 60), glyceryl monooleate (GMO), glyceryl monostearate (GMS), glyceryl monopalmitate (GMP), polyglyceryl ester of lauric acid - polyglyceryl polylaurate (PGPL), polyglyceryl ester of stearic acid - polyglyceryl polystearate (PGPS), polyglyceryl ester of oleic acid (PGPO), polyglyceryl polyoleate (PGPO), polyglyceryl ester of ricin oleic acid (PGPR), diglycerides, monoglycerides, calcium stearoyl lactylate, sodium stearoyl lactylate, sucrose esters, triethyl citrate and mixtures of at least two of the afore-said surfactants.

12. The use of an oleogel according to claim 11, **characterized in that** the surfactant has a proportion of 0.1 % by weight to 30 % by weight, in particular 1 % by weight to 20 % by weight, preferably 5 % by weight to 15 % by weight, based on the total weight of the oleogel.

13. The use of an oleogel according to any of the preceding claims, **characterized in that** the oleogel further comprises an antioxidant, in particular selected from the group consisting of butylated hydroxyanisole, butylated hydroxytoluene, gallates, tertiary butylhydroquinone (TBHQ), tocopherols, caffeic acid, ferulic acid, gallic acid, hydroxytyrosol, tyrosol, carnosic acid, catechin, quercetin, sesamol, myricetin, genistein, oryzanol, phytosterols, sesamolin, squalene and mixtures of at least two of the afore-said antioxidants.

14. Object layered with an oleogel according to any of the preceding claims.

15. Process for layering an object comprising the step of applying an oleogel according to any of the claims 1 to 13 on a surface of the object.
